# EUROPEAN PATENT APPLICATION

(11) **EP 3 333 845 A1**
(43) Date of publication of application: **13.06.2018**
(21) Application number: 17159932.7
(22) Date of filing: 08.03.2017
(51) Int. Cl.: G09G 5/34, G08G 1/16

(54) **SYSTEM AND METHOD OF DYNAMICALLY ADJUSTING FIELD OF VIEW OF AN IMAGE CAPTURING DEVICE**

(30) Priority: 12.12.2016 IN 201641042399
(71) Applicant: Wipro Limited, 560 035 Karnataka (IN)
(72) Inventor: SUD, Aashish, 134107 Haryana (IN); DITTI, Sandip Kumar, 700091 West Bengal (IN); SWAIN, Sudhansu Sekhar, 754114 Odisha (IN)
(74) Representative: Finnegan Europe LLP

(57) **Abstract**

A system for dynamically adjusting a Field of View (FOV) of an image capturing device associated with a vehicle is disclosed. The system determines at least one of a direction of the vehicle with respect to a normal, a centrifugal force associated with the vehicle, a tilt of the vehicle against the horizon, a gravitational force associated with the vehicle and a driving profile of a driver of the vehicle. The system further determines a parking position of the vehicle. The system further adjusts the FOV of the image capturing device based on at least one of the parking position and the driving profile of the driver.

## Description

### Technical Field

This disclosure relates generally to adjusting a Field of View (FOV) of an image capturing device and, more particularly but without limitation, to a system and method of dynamically panning and tilting the FOV of an image capturing device based on a parking position.

### Background

In the United States, an average of 210 fatalities and 15,000 injuries per year occur because of backover accidents. Victims of backover accidents are mostly children under 5 years and elders over 70 years. Because of the great number of fatalities, there arose a requirement for installation of rear view image capturing devices in vehicles. In order to satisfy the requirement, a number of automobile manufacturers have started to integrate rear view image capturing devices in their vehicles.

Traditionally, a fixed point image capturing device may be attached to the rear of the vehicle to provide a Field of View (FOV) to a driver when the vehicle is reversed or backed up. The automobile manufacturers typically use fish eye lens image capturing devices for their wider angle fields of view (FOV). However, it is difficult for drivers to detect objects and estimate distance due to curved images received as output from fish eye lens image capturing devices.

One of the disadvantages of the present image capturing devices is that they may not take into account the position at which the vehicle was previously parked. For instance, a vehicle parked at a slope might need to make certain adjustments to its image capturing device so that a blind spot to the driver is reduced. Also, the present image capturing devices may not take into account the driving style of the driver.

### SUMMARY

In an embodiment, the present disclosure illustrates a method of dynamically adjusting field of view (FOV) of an image capturing device. The method comprises, determining at least one of direction of the vehicle with respect to a normal, centrifugal force associated with the vehicle, tilt of the vehicle against horizon, gravitational force associated with the vehicle and a driving profile of a driver of the vehicle. The method further comprises determining a parking position of the vehicle based on at least one of the direction, the centrifugal force, the tilt of the vehicle against horizon and the gravitational force. The method further comprises adjusting the FOV of the image capturing device based on at least one of the parking position and the driving profile of the driver.

In another embodiment, a system for dynamically adjusting field of view (FOV) of an image capturing device associated with a vehicle is disclosed. The system comprises a processor and a memory communicatively coupled to the processor. The memory stores processor instructions, which, on execution, causes the processor to determine at least one of direction of the vehicle with respect to a normal, centrifugal force associated with the vehicle, tilt of the vehicle against horizon, gravitational force associated with the vehicle and a driving profile of a driver of the vehicle. The processor further determines a parking position of the vehicle based on at least one of the direction, the centrifugal force, the tilt of the vehicle against horizon and the gravitational force. The processor further adjusts the FOV of the image capturing device based on at least one of the parking position and the driving profile of the driver.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
FIG. 1 illustrates an exemplary network implementation comprising a processing circuit to dynamically adjust Field of View (FOV) of an image capturing device associated with a vehicle, in accordance with some embodiments of the present disclosure.
FIG. 2 is an exemplary schematic view, showing the adjustment of the FOV of the image capturing device associated with a vehicle at a turning point in accordance with some embodiments of the present disclosure.
FIG. 3 is an exemplary schematic view showing the adjustment of the FOV of the image capturing device associated with a vehicle at a slope in accordance with some embodiments of the present disclosure.
FIG. 4 illustrates a flowchart of a method of dynamically adjusting Field of View (FOV) of an image capturing device associated with a vehicle, in accordance with some embodiments of the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

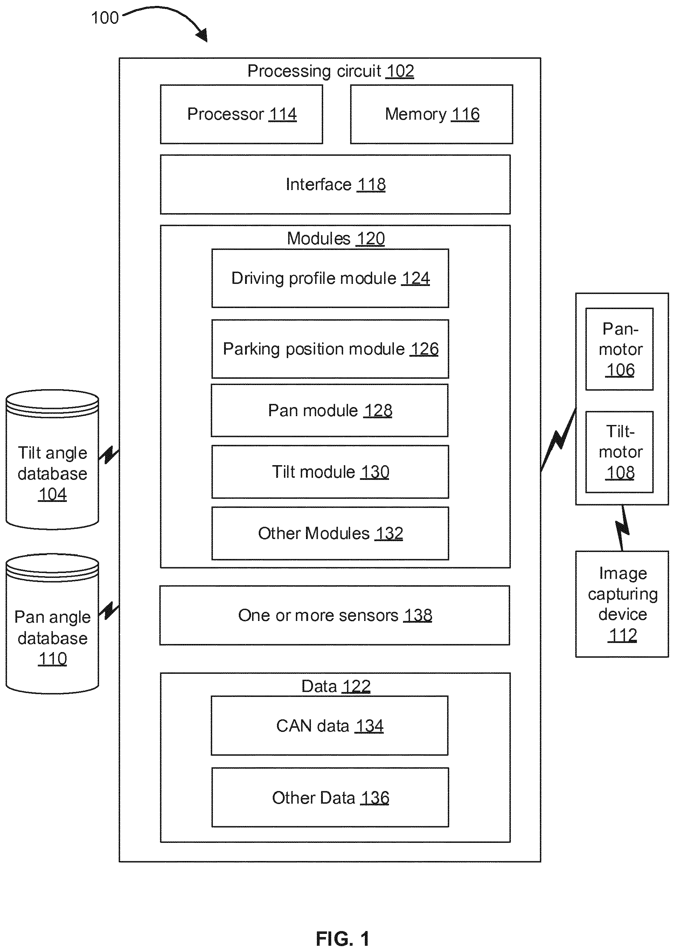

Working of the systems and methods for dynamically adjusting a Field of View (FOV) of an image capturing device is described in conjunction with FIG. 1-4. It should be noted that the description and drawings merely illustrate the principles of the present subject matter. It will thus be appreciated that those skilled in the art will be able to devise various arrangements that, although not explicitly described or shown herein, embody the principles of the present subject matter and are included within its scope. Furthermore, all examples recited herein are principally intended expressly to be only for pedagogical purposes to aid the reader in understanding the principles of the present subject matter and are to be construed as being without limitation to such specifically recited examples and conditions. Moreover, all statements herein reciting principles, aspects, and embodiments of the present subject matter, as well as specific examples thereof, are intended to encompass equivalents thereof.

FIG. 1 illustrates an exemplary network implementation 100 comprising a processing circuit 102, in accordance with some embodiments of the present disclosure. As shown in FIG. 1, the processing circuit 102 may be communicatively coupled to a tilt angle database 104 and may further be communicatively coupled to at least one of a pan-motor 106 and a tilt-motor 108. The processing circuit 102 may further be communicatively coupled to a pan angle database 110 The pan-motor 106 and the tilt-motor 108 may be communicatively coupled to the image capturing device 112, so that rotation in the pan-motor 106 and the tilt-motor 108 may induce proportional rotation of the image capturing device 112. Although the tilt angle database 104, the pan angle database 110, the pan-motor 106 and the tilt-motor 108 are shown external to the processing circuit 102 in FIG. 1, it may be noted that the tilt angle database 104, the pan angle database 110, the pan-motor 106 and the tilt-motor 108 may be present within the processing circuit 102.

As shown in FIG. 1, the processing circuit 102 comprises a processor 114, a memory 116 coupled to the processor 114, and interface 118(s). The processor 114 may be implemented as one or more microprocessors, microcomputers, microcontrollers, digital signal processors, central processing units, state machines, logic circuitries, and/or any devices that manipulate signals based on operational instructions. Among other capabilities, the processor 114 is configured to fetch and execute computer-readable instructions stored in the memory 116. The memory 116 can include any non-transitory computer-readable medium known in the art including, for example, volatile memory (e.g., RAM), and/or nonvolatile memory (e.g., EPROM, flash memory, etc.).

The interface(s) 118 may include a variety of software and hardware interfaces, allowing the processing circuit 102 to interact with the pan-motor 106 and the tilt-motor 108. Further, the interface 118(s) may enable the processing circuit 102 to communicate with other computing devices.

In one example, the processing circuit 102 includes modules 120 and data 122. In one embodiment, the modules 120 and the data 122 may be stored within the memory 116. In one example, the modules 120, amongst other things, include routines, programs, objects, components, and data structures, which perform particular tasks or implement particular abstract datatypes.

In one implementation, the modules 120 include a driving profile module 124, a parking position module 126, a pan module 128 and a tilt module 130. In an example, the modules 120 may also comprises other modules 132. The other modules 132 may perform various miscellaneous functionalities of the processing circuit 102. It will be appreciated that such aforementioned modules may be represented as a single module or a combination of different modules.

In one example, the data 122 serves, among other things, as a repository for storing data fetched, processed, received and generated by one or more of the modules 120. In one implementation, the data 122 may include Controller Area Network (CAN) data 134. The CAN data 134 may be data that is transmitted via a CAN bus. The CAN bus is a vehicle bus standard that enables microcontrollers and devices to communicate with each other. The CAN data 134 comprises at least one of speed, Revolutions per minute (RPM), acceleration or power mode. The power mode comprises at least one of OFF mode, RUN mode, ACC mode, or CRANK mode, wherein the ACC mode means Accessory mode. In one embodiment, the data 122 may be stored in the memory 116 in the form of various data structures. In an example, the data 122 may also comprise other data 136 including temporary data and temporary files, generated by the modules 120 for performing the various functions of the processing circuit 102.

In order to dynamically adjust the field of view (FOV) of an image capturing device 112 associated with a vehicle, at least one of direction of the vehicle with respect to a normal, a centrifugal force associated with the vehicle, a tilt of the vehicle against the horizon (or, more generally, the tilt of the vehicle with respect to a horizontal plane), or a gravitational force associated with the vehicle may be determined from one or more sensors 138. In one embodiment, the one or more sensors 138 may be at least one of a gyro sensor, a magnetic sensor, a speedometer, a tachometer or an accelerometer. In one embodiment, the direction of the vehicle may be determined using the magnetic sensor. When the vehicle moves, concentration of magnetic flux varies. This principle may be used to determine the direction of the vehicle using magnetic sensor. In one embodiment, the centrifugal force may be determined using the gyro sensor. In one embodiment, the tilt of the vehicle may be determined using a three-axis accelerometer. In another embodiment, the tilt of the vehicle may be determined with more precision, using both the gyro sensor and the accelerometer. The gravitational force may be determined using the accelerometer, in one embodiment.

In addition to determining the at least one of the direction, the centrifugal force, the tilt of the vehicle or the gravitational force, a driving profile of a driver of the vehicle may also be determined. The driving profile comprises at least one of a historic driving behavior and a current driving behavior of the driver. The historic driving behavior may entail a driving style of the driver recorded in previous circumstances. For instance, the fact that the driver accelerates quickly from a stationary start may be included in the historic driving behavior. The current driving behavior may be determined by using speed and revolutions per minute (RPM) associated with the vehicle. For instance, the current driving behavior may include the speed of the vehicle and the RPM of the vehicle at the current point of time. The speed and the RPM may be determined from the speedometer and the tachometer respectively.

After determining at least one of the direction of the vehicle, the centrifugal force, the tilt of the vehicle, the gravitational force or the driving profile, a parking position of the vehicle may be determined. The parking position may include information regarding a position where the vehicle was previously parked. For instance, the parking position may be at a slope or at a turning point. The parking position may be determined using the at least one of direction of the vehicle, the centrifugal force, the tilt of the vehicle or the gravitational force. In one illustration, the parking position may be at a slope. The parking position of the vehicle in this illustration may be inferred from at least one of the tilt of the vehicle and the gravitational force. In another illustration, the parking position may be at a turning point. The parking position in this illustration may be inferred from at least one of the direction of the vehicle and the centrifugal force.

After determining the parking position, the FOV of the image capturing device 112 may be adjusted based on the parking position. Adjusting based on the parking position entails determining a default position of the image capturing device 112, which is associated with the parking position of the vehicle. The default position for the image capturing device 112 may be determined by initially calculating a slope angle of the road. The slope angle of the road may be calculated based on at least one of the tilt of the vehicle and the gravitational force. In one embodiment, the slope angle may be calculated using a longitudinal accelerometer. After calculating the slope angle, the slope angle may be used to look up a tilt angle database 104 to determine corresponding tilt angle to which an image capturing device 112 needs to be adjusted to, to get a clear view of posterior of the vehicle. The tilt angle database 104 may include a slope angle and a tilt angle that may be mapped to the slope angle. Using the default position, it may be possible to conclude that the vehicle was parked at a slope.

In another embodiment, the default position of the image capturing device 112 may be determined from a predetermined steering angle of the vehicle. The steering angle may be calculated based on at least one of the direction of the vehicle and the centrifugal force. After calculating the steering angle, the steering angle may be used to look up a pan angle database 110 to determine corresponding pan angle to which an image capturing device 112 may be adjusted to, to get a clear view of posterior of the vehicle. The pan angle database 110 may include a steering angle and a pan angle that may be mapped to the steering angle.

In addition to adjusting the FOV based on the parking position, the FOV may also be adjusted based on the driving profile. This involves initially identifying a predefined requisite action of the image capturing device 112 based on the driving profile. The driving profile comprises at least one of historic driving behavior and current driving behavior. In one embodiment, the requisite action of the image capturing device 112 may be identified based on the speed and the RPM of the vehicle.

In one illustration, the vehicle may be switched from the ACC mode to the RUN mode and if the RPM is greater than the predefined threshold and the speed is lower than a predefined threshold, that is the vehicle has just started to move slowly, then the image capturing device 112 may initially be tilted down to detect small objects. Afterwards, the image capturing device 112 may be gradually set to the default position associated with the parking position. The default position may be determined by first calculating the steering angle and the slope angle which are both associated with the parking position. If the determined parameter is the steering angle then the steering angle may be mapped to the pan angle database 110, in order to determine the default position. If the determined parameter is the slope angle then the slope angle may be mapped to the tilt angle database 104, in order to determine the default position.

In another illustration, the vehicle may be in the RUN mode and if the RPM is greater than the predefined threshold and if the speed is greater than the predefined threshold, that is the vehicle is moving quickly, then the requisite action may be to at least one of tilt and pan the image capturing device 112 based on the orientation of the vehicle. Once the requisite action has been identified, the image capturing device 112 may perform the requisite action.

Adjusting the FOV based on the driving profile further comprises adjusting based on the historic driving behavior. In one embodiment, the processing circuit 102 may compare the current driving behavior with the historic driving behavior. If the processing circuit 102 finds that the current driving behavior is the same as the historic driving behavior, then the requisite action corresponding to the historic driving behavior may be performed. However, if the processing circuit 102 finds that the current driving behavior is different from the historic driving behavior, then the requisite action corresponding to the current driving behavior may be performed.

For instance, if the driver of the vehicle generally accelerates quickly when he reverses, the processing circuit 102 may prepare the image capturing device 112 to tilt or pan based on the orientation of the vehicle. This may be relevant information since normally the switch from the ACC mode to the RUN mode is accompanied by less speed compared to the predefined threshold and greater RPM compared to the predefined threshold and the corresponding requisite action is to initially tilt down the image capturing device 112. Then, the processing circuit 102 compares the current driving behavior with the historic driving behavior and finds that presently the driver is reversing slowly. Then the image capturing device 112 may perform the requisite action corresponding to the current driving behavior, that is to initially to tilt down the image capturing device 112 to detect small objects. After that the image capturing device 112 may be gradually set to the default position associated with the parking position.

Adjusting the FOV of the image capturing device 112 comprises panning and tilting the image capturing device 112. For this purpose, initially, a pan angle and a tilt angle needs to be determined. The pan angle may be determined based on at least one of the direction of the vehicle and the centrifugal force. The tilt angle may be determined based on at least one of the gravitational force and the tilt of the vehicle against horizon. After calculating the pan angle, a rate of change of pan may be determined based on the pan angle and an angular acceleration. The angular acceleration may be determined based on at least one of the speed, the RPM or the acceleration. After determining the tilt angle, the rate of change of tilt may be determined. The rate of change of tilt may be based on the tilt angle and at least one of a downhill acceleration and an uphill acceleration. The downhill and the uphill acceleration may be determined based on at least one of the speed, the RPM or the acceleration. Adjusting the FOV of the image capturing device 112 further comprises adjusting a pan-motor 106 and a tilt-motor 108 associated with the image capturing device 112. The rate of change of pan may be mapped to a shaft-pan rotation angle associated with the pan-motor 106. The rate of change of tilt may be mapped to a shaft-tilt rotation angle associated with the tilt-motor 108. In one embodiment, the pan-motor 106 and the tilt-motor 108 may be a stepper motor, in which case the stepper motor shifts step by step based on at least one of the shaft-pan rotation angle and the shaft-tilt rotation angle. Since the image capturing device 112 is connected to the pan-motor 106 and the tilt-motor 108, rotation made by the pan-motor 106 and the tilt-motor may be reflected on to the image capturing device 112, thus adjusting the FOV of the image capturing device 112. Although the tilt-motor 108 and pan-motor 106 has been mentioned as two different motors, in one implementation, it may be possible for the processing circuit 102 to function with just one motor. That is both the panning and the tilting may be done by the same motor by adjusting the positioning of the motor.

In one illustration, a vehicle may be switched from the OFF mode to the ACC mode. The image capturing device 112 needs to be adjusted to the default position associated with the parking position. The parking position of the vehicle may be determined from the tilt of the vehicle and the gravitational force of the vehicle when the vehicle was previously parked at a slope. The tilt angle to which the image capturing device 112 needs to be adjusted to, is determined by mapping the slope angle to the tilt angle in the tilt angle database 104. The slope angle may be determined from the tilt of the vehicle and the gravitational force.

In this illustration, the processing circuit 102 may take into account the historic driving behavior. For instance, if the driver of the vehicle generally accelerates quickly when he reverses, the processing circuit 102 may prepare the image capturing device 112 to tilt or pan based on the orientation of the vehicle. This may be relevant information since normally the switch from the ACC mode to the RUN mode is accompanied by less speed compared to the predefined threshold and greater RPM compared to the predefined threshold and the corresponding requisite action is to initially tilt down the image capturing device 112. The processing circuit 102 compares the current driving behavior with the historic driving behavior and finds that presently the driver is reversing slowly, then the image capturing device 112 may perform the requisite action corresponding to the current driving behavior. That is to initially tilt down the image capturing device 112 to detect small objects. After that the image capturing device 112 may be gradually set to the default position associated with the parking position.

In the same illustration when the vehicle is in the RUN mode and if the RPM is greater than the threshold and the speed is greater than the threshold, then the corresponding requisite action is to tilt or pan the image capturing device 112 based on the orientation of the vehicle. If the vehicle is at a slope, the image capturing device 112 needs to tilt. A tilt angle may be determined from tilt of the vehicle and the gravitational force. The rate of change of tilt may be determined from the tilt angle and the uphill acceleration. The uphill acceleration may be determined from at least one of the speed, the RPM or the acceleration. The rate of change of tilt may be mapped to a shaft-tilt rotation angle of a tilt-motor 108. This rotation may be reflected on to the image capturing device 112 which is connected to the tilt-motor 108.

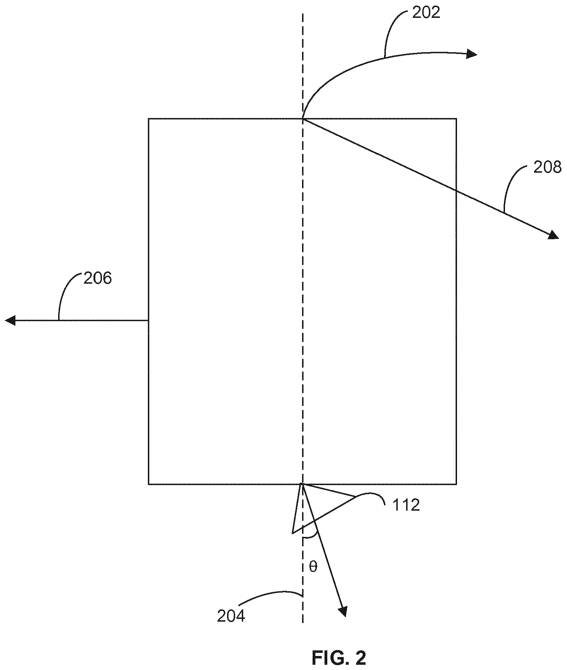

FIG. 2 is a schematic top view of a first exemplary embodiment, showing an adjustment of Field of view (FOV) of the image capturing device 112 associated with a vehicle at a turning point. In one embodiment, direction 202 of the vehicle against a normal 204 associated with the vehicle may be determined using a magnetic sensor. Centrifugal force 206 acting on the vehicle may be determined using a gyro sensor. An angular acceleration 208 may be determined based on at least one of speed, Revolutions per minute (RPM) or acceleration. Based on the centrifugal force 206 and the direction 202 of the vehicle, a pan angle may be determined. A rate of change of pan may be determined based on the pan angle and the angular acceleration 208. After determining the rate of change of pan, the rate of change of pan is mapped to a shaft-pan rotation angle (θ). The pan-motor 106 connected to the image capturing device 112 is rotated based on the shaft-pan rotation angle (θ). The rotation to the pan-motor 106 may be reflected on to the image capturing device 112, since the pan-motor 106 and image capturing device 112 may be connected to each other.

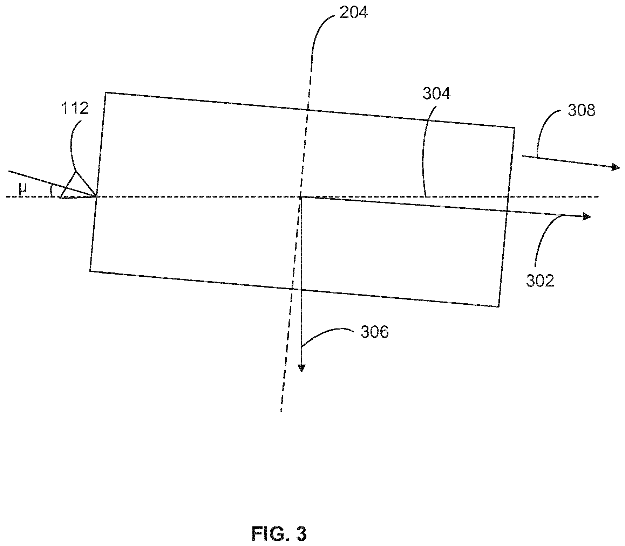

FIG. 3 is a schematic side view of a secondary exemplary embodiment showing the adjustment of the FOV of the image capturing device 112 associated with a vehicle at a slope. In one embodiment, tilt 302 of the vehicle against horizon 304 may be determined using a three-axis accelerometer. The gravitational force 306 may be determined using an accelerometer. A downhill acceleration 308 may be determined based on at least one of the speed, the RPM or the acceleration. Based on the gravitational force 306 and the tilt 302 of the vehicle against horizon 304, a tilt angle associated with the image capturing device 112 may be determined. Rate of change of the tilt may be determined based on the tilt angle and the downhill acceleration 308. After determining the rate of change of tilt, the rate of change of tilt may be mapped on to a corresponding shaft-tilt rotation angle (µ). A tilt-motor 108 connected to an image capturing device 112 may be adjusted based on the shaft-tilt rotation angle (µ). Hence, the rotation of the tilt-motor 108 may be reflected on to the image capturing device 112.

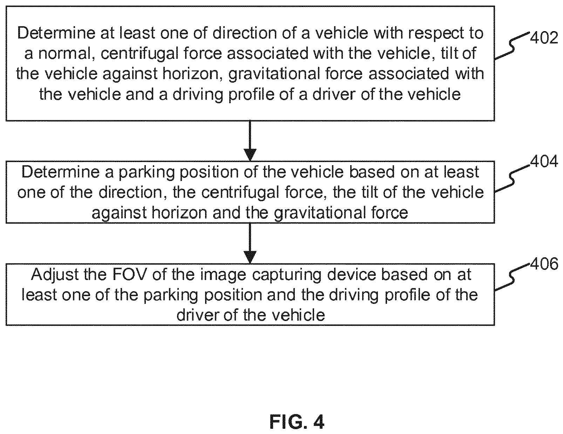

FIG. 4 illustrates an exemplary method of dynamically adjusting field of view (FOV) of an image capturing device 112 associated with a vehicle. At least one of direction 202 of the vehicle with respect to a normal 204, centrifugal force 206 associated with the vehicle, tilt 302 of the vehicle against horizon 304, gravitational force 306 associated with the vehicle and a driving profile of a driver of the vehicle may be determined, at step 402. The direction 202 of the vehicle, the centrifugal force 206, the tilt 302 of the vehicle, the gravitational force 306 may be determined from one or more sensors 138. In one embodiment, the one or more sensors 138 may be at least one of a gyro sensor, a magnetic sensor, a speedometer, a tachometer or an accelerometer. In one embodiment, the magnetic sensor may be used to determine the direction 202 of the vehicle. In one embodiment, the centrifugal force 206 may be determined using the gyro sensor. A three-axis accelerometer may be used to determine the tilt 302 of the vehicle, in one embodiment. In another embodiment, the tilt 302 of the vehicle may be determined with more precision, using both the gyro sensor and the accelerometer. In one embodiment, the gravitational force 306 may be determined using the accelerometer.

The driving profile of the driver of the vehicle may be determined based on the speed and the RPM associated with the vehicle. The speed and the RPM may be determined from the speedometer and the tachometer respectively. The driving profile comprises at least one of a historic driving behavior and a current driving behavior of the driver. The historic driving behavior may entail the driving style of the driver recorded in previous circumstances. The current driving behavior may be determined by using the speed and the RPM.

After determining the at least one of the direction 202 of the vehicle, the centrifugal force 206, the tilt 302 of the vehicle, the gravitational force 306 and the driving profile of the vehicle, a parking position of the vehicle may be determined at step 404. The parking position may entail information regarding previously parked position of the vehicle. In one embodiment, the parking position may be at a slope or at a turning point. The parking position may be determined using the at least one of the direction 202 of the vehicle, the centrifugal force 206, the tilt 302 of the vehicle and the gravitational force 306. In one illustration, when the vehicle is parked at a slope, the fact that the parking position is at a slope may be determined using at least one of the tilt 302 of the vehicle and the gravitational force 306. In another illustration, when the vehicle is parked at a turning point, the fact that the parking position is at the turning point may be determined based on at least one of the direction 202 of the vehicle and the centrifugal force 206.

After determining the parking position, field of view (FOV) of the image capturing device 112 may be adjusted based on the parking position and the driving profile at step 406. Adjusting the FOV comprises tilting or panning the image capturing devices 112. For this purpose, a pan angle and a tilt angle associated with the image capturing device 112 may be determined. The pan angle may be determined based on at least one of the direction 202 of the vehicle and the centrifugal force 206. The tilt angle may be determined based on at least one of the gravitational force 306 and the tilt 302 of the vehicle. After calculating the pan angle, a rate of change of pan may be determined based on the pan angle and an angular acceleration 208. In one embodiment, the angular acceleration 208 may be determined based on at least one of the speed, the RPM or the acceleration. After determining the tilt angle, a rate of change of tilt may be determined based on the tilt angle and at least one of a downhill acceleration 308 and an uphill acceleration. The downhill 308 and uphill acceleration may be determined based on at least one of the speed, the RPM or the acceleration.

Adjusting the FOV of the image capturing devices 112 may further comprise adjusting at least one of a pan-motor 106 and a tilt-motor 108 associated with the image capturing device 112. In one embodiment, the rate of change of pan may be mapped to a shaft-pan rotation angle (θ) associated with the pan-motor 106. In another embodiment, the rate of change of tilt may be mapped to a shaft-tilt rotation angle (µ) associated with the tilt-motor 108. In one embodiment, the pan-motor 106 and the tilt-motor 108 may be connected to the image capturing device 112. Hence, the rotation made by the pan-motor 106 and the tilt-motor 108 may be reflected on to the image capturing device 112, thus adjusting the FOV of the image capturing device 112. Although the tilt-motor 108 and the pan-motor 106 has been mentioned as two different motors, in one implementation it may be possible for the processing circuit 102 to function with only one motor. That is both the panning and the tilting may be done by the same motor by adjusting the positioning of the motor.

Adjusting the FOV may be performed based on the parking position of the vehicle. Adjusting the FOV based on the parking position entails determining a default position of the image capturing device 112, which is associated with the parking position of the vehicle. In one illustration, the parking position of the vehicle may be a slope. In this illustration, the default position for the image capturing device 112 may be determined by first calculating a slope angle of the road. The slope angle may be calculated based on at least one of the tilt 302 of the vehicle and the gravitational force 306. In one embodiment, the slope angle may be calculated using a longitudinal accelerometer. After calculating the slope angle, the slope angle may be used to look up a tilt angle database 104 to determine corresponding tilt angle to which an image capturing device 112 needs to be adjusted to, to get a clear view of the posterior of the vehicle.

In another illustration, the parking position of the vehicle may be a turn. The default position of the image capturing device 112 may be determined from a predetermined steering angle of the vehicle. The steering angle may be calculated based on at least one of the direction 202 of the vehicle and the centrifugal force 206. After calculating the steering angle, the steering angle may be used to look up a pan angle database 110 to determine corresponding pan angle to which an image capturing device 112 may be adjusted to, to get a clear view of the posterior of the vehicle.

Adjusting the FOV further comprises adjusting the FOV based on the driving profile. This entails initially identifying a predefined requisite action of the image capturing device 112 based on the driving profile. The requisite action may be identified based on the speed and the RPM of the vehicle, in one embodiment. Once the requisite action is identified, the image capturing device 112 may perform the requisite action.

Adjusting the FOV of the image capturing device 112 based on the driving profile comprises adjusting the FOV based on the historic driving behavior. In one embodiment, the processing circuit 102 anticipates the driving behavior of the driver and may prepare the image capturing device 112 to perform the requisite action corresponding to the historic driving behavior. The processing circuit 102 may compare the current driving behavior with the historic driving behavior. If the processing circuit 102 finds that the current driving behavior is the same as the historic driving behavior, then the image capturing device 112 may perform the requisite action corresponding to the historic driving behavior. However, if the processing circuit 102 finds that the current driving behavior is different from the historic driving behavior, then the image capturing device 112 may have to perform the requisite action corresponding to the current driving behavior.

## Claims

1. A method of dynamically adjusting a field of view (FOV) of an image capturing device associated with a vehicle, the method comprising:
determining, using one or more sensors, at least one of a direction of the vehicle with respect to a normal, a centrifugal force associated with the vehicle, a tilt of the vehicle against the horizon, a gravitational force associated with the vehicle and a driving profile of a driver of the vehicle;
determining, by a processing circuit, a parking position of the vehicle based on at least one of the direction, the centrifugal force, the tilt of the vehicle against horizon and the gravitational force; and
adjusting, by the processing circuit, the FOV of the image capturing device based on at least one of the parking position and the driving profile of the driver.

2. The method as claimed in claim 1, wherein the one or more sensors comprises at least one of a gyro sensor, a magnetic sensor, an accelerometer, a speedometer or a tachometer.

3. The method as claimed in claim 1 or claim 2, wherein the driving profile comprises at least one of a historic driving behavior and a current driving behavior of the driver.

4. The method as claimed in any of the preceding claims, wherein adjusting the FOV of the image capturing device comprises at least one of tilting the image capturing device and panning the image capturing device.

5. The method as claimed in any of the preceding claims, further comprising determining a pan angle based on at least one of the direction of the vehicle and the centrifugal force associated with the vehicle.

6. The method as claimed in claim 5, further comprising determining a rate of change of pan based on the pan angle and an angular acceleration associated with the vehicle.

7. The method as claimed in claim 6, wherein adjusting the FOV of the image capturing device comprises:
mapping the rate of change of pan to a shaft-pan rotation angle of a pan-motor associated with the image capturing device; and
adjusting the FOV of the image capturing device by actuating a shaft of the pan-motor based on the shaft-pan rotation angle.

8. The method as claimed in any of the preceding claims, further comprising determining a tilt angle based on at least one of the gravitational force and the tilt of the vehicle against the horizon.

9. The method as claimed in claim 8, further comprising determining a rate of change of tilt based on the tilt angle and at least one of a downhill acceleration and an uphill acceleration associated with the vehicle.

10. The method as claimed in claim 9, wherein adjusting the FOV of the image capturing device comprising:
mapping the rate of change of tilt to a shaft-tilt rotation angle of a tilt-motor associated with the image capturing device; and
adjusting the FOV of the image capturing device by rotating a shaft of the tilt-motor based on the shaft-tilt rotation angle.

11. A system for dynamically adjusting Field of View (FOV) of an image capturing device associated with a vehicle, the system comprising:
a processor;
a memory communicatively coupled to the processor, wherein the memory stores the processor-executable instructions, which, on execution, causes the processor to perform the method of any of the preceding claims.

12. A processor-readable medium comprising instructions which, when executed by one or more processors, cause the one or more processors to perform the method as claimed in any of claims 1 to 10.
